# EUROPEAN PATENT SPECIFICATION

(11) **EP 3 968 798 B1**
(45) Date of publication and mention of the grant of the patent: **05.07.2023**
(21) Application number: 20724151.4
(22) Date of filing: 12.05.2020
(51) Int. Cl.: A24F 40/60, A24F 40/20, A24F 40/51, A24F 40/65

(54) **AN AEROSOL-GENERATING SYSTEM AND HAPTIC OUTPUT ELEMENTS FOR AN AEROSOL-GENERATING SYSTEM**
AEROSOLERZEUGUNGSSYSTEM UND HAPTISCHE AUSGABEELEMENTE FÜR EIN AEROSOLERZEUGUNGSSYSTEM
SYSTÈME DE GÉNÉRATION D'AÉROSOLS ET ÉLÉMENTS DE SORTIE HAPTIQUE POUR UN SYSTÈME DE GÉNÉRATION D'AÉROSOLS

(30) Priority: 17.05.2019 EP 19175229
(43) Date of publication of application: 23.03.2022
(73) Proprietor: Philip Morris Products S.A., 2000 Neuchâtel (CH)
(72) Inventor: DESNERCK, Simon, 8500 Kortrijk (BE); TINGSTRÖM, Torsten Richard Mathias, 1007 Lausanne (CH); ROJAS, Ezequiel Valdez, 1007 Lausanne (CH)
(74) Representative: Millburn, Julie Elizabeth
(86) International application number: PCT/EP2020/063236
(87) International publication number: WO 2020/234059

(56) References cited:
- WO-A1-2019/173923
- US-A1- 2015 020 825
- US-A1- 2018 035 714

## Description

The present invention relates to an aerosol-generating system, to a device for use with the system, and to a method of generating an aerosol. In particular, the invention relates to handheld aerosol-generating systems and devices which vaporise an aerosol-forming substrate by heating to generate an aerosol to be puffed or inhaled by a user, and which include an interface element.

One type of aerosol-generating system is an electrically heated smoking system that generates an aerosol for a user to puff or inhale. Electrically heated smoking systems come in various forms. Some types of electrically heated smoking systems are e-cigarettes that vaporise a liquid or gel substrate to form an aerosol, or release an aerosol from a solid substrate by heating it to a certain temperature below the combustion temperature of the solid substrate.

Handheld electrically operated aerosol-generating devices and systems are known that consist of a device portion comprising a battery and control electronics, a portion for containing or receiving an aerosol-forming substrate and an electrically operated heater for heating the aerosol-forming substrate to generate an aerosol. A mouthpiece portion is also included on which a user may puff to draw aerosol into their mouth.

Some devices and systems use a liquid or gel aerosol-forming substrate stored in a storage portion. Such devices can use a wick to carry the liquid or gel aerosol-forming substrate from the storage portion to the heater where it is aerosolised. Such devices can use a displacement mechanism such as a pump and piston to displace the liquid or gel aerosol-forming substrate from the storage portion to the heater. Other types of aerosol-generating devices and systems use a solid aerosol-forming substrate that includes a tobacco material. Such devices may comprise a recess for receiving a cigarette-shaped rod comprising the solid aerosol-forming substrate, such as folded sheets that include a tobacco material. A blade-shaped heater arranged in the recess is inserted into the centre of the rod as the rod is received in the recess. The heater is configured to heat the aerosol-forming substrate to generate an aerosol without substantially combusting the aerosol-forming substrate.

Electrically heated smoking systems can provide a significantly different user experience than a conventional, combustion-based cigarette. For example, the user interacts with a device rather than lighting a cigarette. In some cases, the interaction may not necessarily be limited to a single device but can include interaction with one or more peripheral devices.

Such a multitude of different systems, devices, and peripheral devices can mean a multitude of different interactions with the user. For example, depending on the particular electrically heated smoking system, exemplary activation of a given electrically heated smoking system can be performed by a single press on a button, multiple presses on a button, or an extended press on a button. Additionally, depending on the particular electrically heated smoking system, certain feedback may be provided to the user responsive to the activation, such as a vibration signal, an auditory signal, or a light signal, or no feedback may be provided responsive to the actuation. Additionally, depending on the particular electrically heated smoking system, the user may have to wait for a certain time before the aerosol can be consumed, e.g., before the heater is at a sufficient temperature to generate the aerosol. The system may or may not indicate whether a waiting time is running, and may or may not give an indication of the elapsed waiting time or remaining waiting time. Such indication, if provided, may include one or more of a number of illuminated lights, a brightness of one or more lights, a pulsing or intermittent illumination of a light, a change of colour of one or more lights, or an output of a textual or graphical interface. Additionally, depending on the particular electrically heated smoking system, the device may or may not give feedback when the consumable (e.g., liquid, gel, or solid aerosol-forming substrate) is ready for consumption, such as a vibration signal, an auditory signal, or a light signal, which may be in a state in the indication of the waiting time as indicated above. Additionally, some electrically heated smoking systems can use the same output element (such as a light, vibration, or auditory signal) to indicate different functionalities or statuses of the same system, which may be confusing for the user.

Additionally, auditory signals may be muffled if the system is being held or may be inaudible in a loud environment, if the user is listening to headphones, or if the user has an auditory impairment. Nonetheless, others in range may hear such auditory signals and may be disturbed by them. Visual signals such as lights or displays may be obscured by the user's hand or finger when operating the device, or may be distracting for others nearby, particularly in a dark environment. Vibrational signals can be more discreet than auditory or visual signals if the user is holding the device. However, vibrational signals may go unnoticed if the user sets down the device, for example while waiting for the device to heat up for use. In such a circumstance, the user may not receive a signal indicating that the device is ready for use, resulting in a diminished user experience. Additionally, vibrational signals from a device placed on a surface may produce an unpleasant and distracting sound for the user and for others in range. Furthermore, a vibrational signal may be configured to convey only limited information, such as confirmation that a button has been pushed, that a device is ready to be used, or to give a simple warning signal. Additionally, although visual signals may be continuously displayed during waiting times, such as warmup of the device before use or for cleaning the device, providing similar information via a continuous vibrational signal may be unpleasant and annoying to the user.

As such, certain electrically heated smoking systems may convey limited information, may be confusing, may disturb the user or others, or the user may not be in a position to act on the information promptly or appropriately. This can result in a diminished experience for the user.

US 2018/035714A1 discloses an aerosol delivery device that includes a housing defining a reservoir configured to retain aerosol precursor composition, and a power source, heating element and boost converter contained within the housing. The power source is configured to generate a voltage output. The heating element is controllable to activate and vaporize components of the aerosol precursor composition. An LED may be one example of a suitable visual indicator with which the aerosol delivery device may be equipped. Indicators such as audio indicators (e.g., speakers), haptic indicators (e.g., vibration motors) or the like can be included in addition to or as an alternative to visual indicators such as the LED.An objective of the present invention is to provide the user with easily understandable feedback that conveys meaningful information, while preferably minimizing or reducing disturbance to others. For example, some configurations of the present invention can enhance feedback to users by providing an interface in an aerosol-generating system, such as a system including an aerosol-generating device and a plurality of haptic output elements. The haptic output elements are configured to convey information to a user via the user's sense of touch. The haptic output elements respectively can be coupled to any suitable component or components of the aerosol-generating system with which the user may interact during use of the system, for example, coupled to the aerosol-generating device, coupled to one or multiple peripheral devices, or coupled to the aerosol-generating device and to one or multiple peripheral devices. The information provided to the user can be targeted so as to be relevant to the user's particular interaction with the system at a given time. For example, the system can be configured so as to convey certain information to the user via one or more of the haptic output elements when the user is holding the aerosol-generating device, and can be configured so as to convey certain other information to the user via one or more other of the haptic output elements when the user is not holding the aerosol-generating device. Disturbance of the user or others can be reduced or minimized, for example because the user can be notified of relevant information to which the user may appropriately respond.

The plurality of haptic output elements optionally can be provided in the form of distinct elements which respectively are attached to the housings of the aerosol-generating device or to any peripheral devices, and which are controlled by appropriate circuitry. Preferably, any peripheral devices associated with the aerosol-generating device that include one or more of the haptic output elements are configured so as to provide the same type of output to the user via such haptic output element(s), such that the user can interact with multiple components of an aerosol-generating system in a consistent manner. Additionally, haptic output elements on the aerosol-generating device and on any peripheral devices can have a similar appearance as one another, aiding in user familiarity with and interpretation of information conveyed via such haptic output element. Thus, user experience and device management can be improved.

According to a first embodiment of the invention, there is provided an aerosol-generating device. The aerosol-generating device comprises a housing. The housing optionally comprises an air inlet, an air outlet, and an airflow path extending therebetween. The aerosol-generating device includes an aerosol-generating element disposed within the housing and configured to generate an aerosol. The aerosol-generating device includes a plurality of haptic output elements. The aerosol-generating device includes a circuit operably coupled to the plurality of haptic output elements and configured to independently actuate each haptic output element of the plurality of haptic output elements.

In some configurations, at least some haptic output elements of the plurality of haptic output elements optionally are coupled to the housing. The aerosol-generating device further comprises a first sensor coupled to the housing and configured to generate a first status signal responsive to a user holding the aerosol-generating device. The circuit is configured to actuate a first haptic output element of the plurality of haptic output elements responsive to the first status signal. Optionally, the first sensor further is configured to generate a second status signal responsive to the user picking up the aerosol-generating device. The circuit optionally further is configured to actuate a second haptic output element of the plurality of haptic output elements responsive to the second status signal.

Additionally, or alternatively, in some configurations the aerosol-generating device further comprises an input element configured to generate a third status signal. The circuit optionally further is configured to actuate a third haptic output element of the plurality of haptic output elements responsive to the third status signal. Optionally, the input element is selected from the group consisting of a mechanical button, a membrane button, a mechanical switch, a rotary encoder, a dial, a knob, a capacitive touch button, a resistive touch button, a joystick, a slider, a trigger button, a touch screen, and a magnetic switch.

Additionally, or alternatively, in some configurations optionally the aerosol-generating device further comprises a communication interface in operable communication with the circuit. The circuit optionally is configured to communicate with a peripheral device via the communication interface. The peripheral device optionally comprises a fourth haptic output element of the plurality of haptic output elements. Optionally, the circuit further is configured to instruct the peripheral device, via the communication interface, to actuate the fourth haptic output element responsive to an absence of the first status signal. Additionally, or alternatively, optionally the peripheral device comprises a second sensor configured to generate a fifth status signal responsive to a user holding the peripheral device. The circuit optionally further is configured to instruct the peripheral device, via the communication interface, to actuate the fourth output element responsive to the fifth status signal. Additionally, or alternatively, optionally the peripheral device is selected from the group consisting of a phone, a smartphone, a tablet, a smart watch, a smart bracelet, a fitness tracker, another aerosol-generating device, a computer, an augmented reality or virtual reality headset, and wireless headphones.

Additionally, or alternatively, in some configurations optionally the first sensor is selected from the group consisting of a touch sensor, a pressure sensor, an optical sensor, and a motion sensor.

Additionally, or alternatively, in some configurations optionally the haptic output elements of the plurality of haptic output elements independently are selected from the group consisting of a mechanical actuator, a piezoelectric actuator, and a thermal output element.

Additionally, or alternatively, in some configurations optionally the aerosol-generating element comprises a heater.

Also provided is an aerosol-generating system comprising an aerosol-generating device such as provided herein and an aerosol-generating substrate, wherein the aerosol-generating substrate comprises nicotine.

As used herein, the term 'aerosol-generating system' relates to a system that interacts with one or more other elements. One such element with which an 'aerosol-generating system' can interact is an aerosol-forming substrate to generate an aerosol. Another such element with which an 'aerosol-generating system' can interact is a peripheral device. An 'aerosol-generating system' optionally can interact with both an aerosol-forming substrate (e.g., provided within an aerosol-generating article) and any suitable number of peripheral devices.

As used herein, the term `peripheral device' relates to a device that is part of an aerosol-generating system and interacts directly or indirectly with an aerosol-generating device, but is not itself an aerosol-generating device. Examples of peripheral devices include, but are not limited to, a phone, a smartphone, a tablet, a smart watch, a smart bracelet, a fitness tracker, another aerosol-generating device, a computer, an augmented reality or virtual reality headset, and wireless headphones.

As used herein, the term 'aerosol-generating article' relates to an article comprising an aerosol-forming substrate. Optionally, the aerosol-generating article also comprises one or more further components, such as a reservoir, carrier material, wrapper, etc. An aerosol-generating article may generate an aerosol that is directly inhalable into a user's lungs through the user's mouth. An aerosol-generating article may be disposable. An aerosol-generating article comprising an aerosol-forming substrate comprising tobacco may be referred to as a tobacco stick.

As used herein, the term 'aerosol-forming substrate' relates to a substrate capable of releasing one or more volatile compounds that can form an aerosol. Such volatile compounds are released by heating the aerosol-forming substrate to form a vapour. The vapour can condense to form an aerosol, for example a suspension of fine solid particles or liquid droplets in a gas such as air. An aerosol-forming substrate may conveniently be part of an aerosol-generating device or system. In some configurations, the aerosol-forming substrate comprises a gel or liquid, while in other configurations, the aerosol-forming substrate comprises a solid. The aerosol-forming substrate may comprise both liquid and solid components.

As used herein, the term `coupled' relates to an arrangement of elements that can be directly or indirectly in contact with one another. Elements that are `directly' coupled to one another touch one another. Elements that are 'indirectly' coupled to one another do not directly touch one another, but are attached to one another via one or more intermediate elements. Depending on the particular arrangement, elements that are part of the same device or system as one another may be 'directly' in contact with one another or 'indirectly' in contact with one another.

As used herein, the term 'interface' relates to an element through which information can be transmitted, through which information can be received, or through which information can be both transmitted and received. An exemplary interface provided herein includes a haptic output element for transmitting information, and optionally includes a user actuatable input element for receiving information.

As used herein, the term 'haptic output element' relates to an element configured to convey information to a user via the user's sense of touch. For example, the haptic output element is configured such that when such element is actuated, a user can feel and recognize such actuation via the user's sense of touch. Typically, the user can feel the actuation of the haptic output element via his or her sense of touch at a defined portion of the device or system that the user is touching, for example using his or her finger, palm, or lip. Such defined portion of the device or system at which the actuation is felt can be or include, for example, a defined outer (peripheral) portion of the housing of the device of system, or the haptic output element, or any other suitable element of the interface, device, or system that is coupled to the haptic output element. The haptic output element may be actuated in such a manner as to convey information to the user via such actuation. Haptic output elements may be configured so as to convey information to the user by, for example, a vibration, a tap, a force, a temperature change (such as a heat pulse or a cold pulse), or an electrical signal. Haptic output elements can include, but are not limited to, mechanical actuators, piezoelectric actuators, and thermal output elements.

As used herein, the term 'thermal output element' relates to an element that provides information to a user by generating a user-perceptible temperature change.

As used herein, the term `user-perceptible temperature change' relates to a change of temperature that can be felt and recognized by a user. Typically, the user can feel the user-perceptible change of temperature via his or her sense of touch at a defined portion of the device or system that the user is touching, for example using his or her finger, palm, or lip. The portion of the device or system at which the user-perceptible temperature change is generated can initially be at a first temperature, such as ambient (room) temperature, or warmer than ambient temperature, for example because of heat transferred to such element by the aerosol-generating element or because of heat transferred from the user's skin, e.g., finger or lip. Actuation of the thermal output element causes the temperature at the defined portion of the device or system to increase or decrease to a second temperature that is perceptibly different from the first temperature.

The present haptic output elements suitably can be used with and included as part of any aerosol-generating system or device, including as part of any peripheral device to such a system. That is, the present haptic output elements need not necessarily be directly coupled to or provided as part of an aerosol-generating element, but may be directly coupled to or provided as part of any suitable device that is an element of an aerosol-generating system or device.

The aerosol-generating system or device can include a gel, liquid, or solid aerosol-forming substrate, and can include a suitably configured aerosol-generating element configured as to generate an aerosol therefrom.

In configurations in which the aerosol-forming substrate comprises a gel or liquid, the aerosol-generating system or device can include a reservoir holding the aerosol-forming substrate, which reservoir optionally may contain a carrier material for holding the aerosol-forming substrate. The carrier material optionally may be or include a foam, a sponge, or a collection of fibres. The carrier material optionally may be formed from a polymer or copolymer. In one embodiment, the carrier material is or includes a spun polymer.

In some configurations, the aerosol-generating system optionally comprises a cartridge and a mouthpiece couplable to the cartridge. The cartridge optionally comprises at least one of the reservoir and the aerosol-generating element. Additionally, or alternatively, the housing of the aerosol-generating system optionally further comprises an air inlet, an air outlet, and an airflow path extending therebetween, wherein the vapour optionally at least partially condenses into an aerosol within the airflow path.

For example, in various configurations provided herein, the cartridge may comprise a housing having a connection end and a mouth end remote from the connection end, the connection end configured to connect to a control body of an aerosol-generating system. The aerosol-generating element may be located fully within the cartridge, or located fully within the control body, or may be partially located within the cartridge and partially located within the control body. Electrical power may be delivered to the aerosol-generating element from the connected control body through the connection end of the housing. In some configurations, the aerosol-generating element optionally is closer to the connection end than to the mouth end opening. This allows for a simple and short electrical connection path between a power source in the control body and the aerosol-generating element.

The aerosol-generating element, which optionally is or includes a heating element, may be substantially planar. The heating element may comprise a resistive material, e.g., a material that generates heat responsive to flow of electrical current therethrough. In one configuration, the heating element comprises one or a plurality of electrically conductive filaments. The term `filament' refers to an electrical path arranged between two electrical contacts. The heating element may be or include an array of filaments or wires, for example arranged parallel to each other. In some configurations, the filaments or wires may form a mesh. However, it should be appreciated that any suitable configuration and material of the heating element can be used.

For example, the heating element may include or be formed from any material with suitable electrical properties. Suitable materials include but are not limited to: semiconductors such as doped ceramics, electrically 'conductive' ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, constantan, nickel-, cobalt-, chromium-, aluminum-, titanium-, zirconium-, hafnium-, niobium- , molybdenum-, tantalum-, tungsten-, tin-, gallium-, manganese- and iron-containing alloys, and super-alloys based on nickel, iron, cobalt, stainless steel, Timetale, iron-aluminum based alloys and iron-manganese-aluminum based alloys. Timetal^{®} is a registered trade mark of Titanium Metals Corporation. Exemplary materials are stainless steel and graphite, more preferably 300 series stainless steel like AISI 304, 316, 304L, 316L. Additionally, the heating element may comprise combinations of the above materials. In one nonlimiting configuration, the heating element includes or is made of wire. More preferably, the wire is made of metal, most preferably made of stainless steel.

The heater assembly further may comprise electrical contact portions electrically connected to the heating element. The electrical contact portions may be or include two electrically conductive contact pads. In configurations including a housing, the contact portions may exposed through a connection end of the housing to allow for contact with electrical contact pins in a control body.

The reservoir may comprise a reservoir housing. The aerosol-generating element, a heating assembly comprising the aerosol-generating element, or any suitable component thereof may be fixed to the reservoir housing. The reservoir housing may comprise a moulded component or mount, the moulded component or mount being moulded over the aerosol-generating element or the heating assembly. The moulded component or mount may cover all or a portion of the aerosol-generating element or heating assembly and may partially or fully isolate electrical contact portions from one or both of the airflow path and the aerosol-forming substrate. The moulded component or mount may comprise at least one wall forming part of the reservoir housing. The moulded component or mount may define a flow path from the reservoir to the aerosol-generating element.

The housing may be formed form a mouldable plastics material, such as polypropylene (PP) or polyethylene terephthalate (PET). The housing may form a part or all of a wall of the reservoir. The housing and reservoir may be integrally formed. Alternatively the reservoir may be formed separately from the housing and assembled to the housing.

In configurations in which the aerosol-generating system or device includes a cartridge, the cartridge may comprise a removable mouthpiece through which aerosol may be drawn by a user. The removable mouthpiece may cover the mouth end opening. Alternatively the cartridge may be configured to allow a user to draw directly on the mouth end opening.

The cartridge may be refillable with liquid or gel aerosol-forming substrate. Alternatively, the cartridge may be designed to be disposed of when the reservoir becomes empty of liquid or gel aerosol-forming substrate.

In configurations in which the aerosol-generating system or device further includes a control body, the control body may comprise at least one electrical contact element configured to provide an electrical connection to the aerosol-generating element when the control body is connected to the cartridge. The electrical contact element optionally may be elongate. The electrical contact element optionally may be spring-loaded. The electrical contact element optionally may contact an electrical contact pad in the cartridge. Optionally, the control body may comprise a connecting portion for engagement with the connection end of the cartridge. Optionally, the control body may comprise a power supply. Optionally, the control body may comprise control circuitry configured to control a supply of power from the power supply to the aerosol-generating element.

The control circuitry optionally may comprise a microcontroller. The microcontroller is preferably a programmable microcontroller. The control circuitry may comprise further electronic components. The control circuitry may be configured to actuate the present haptic output elements. The control circuitry further may be configured to regulate a supply of power to the aerosol-generating element. Power may be supplied to the aerosol-generating element continuously following activation of the system or may be supplied intermittently, such as on a puff-by-puff basis. The power may be supplied to the aerosol-generating element in the form of pulses of electrical current.

The control body may comprise a power supply arranged to supply power to at least one of the control system, one or more of the haptic output elements, and the aerosol-generating element. The aerosol-generating element may comprise an independent power supply. The aerosol-generating system or device may comprise a first power supply arranged to supply power to the control circuitry, a second power supply configured to supply power to the aerosol-generating element, and a third power supply configured to supply power to one or more of the haptic output elements, or may comprise fewer power supplies that respectively are configured to supply power to any suitable combination of the control circuitry, the aerosol-generating element, and one or more of the haptic output elements.

Each such power supply may be or include a DC power supply. The power supply may be or include a battery. The battery may be or include a lithium based battery, for example a lithium-cobalt, a lithium-iron-phosphate, a lithium titanate or a lithium-polymer battery. The battery may be or include a nickel-metal hydride battery or a nickel cadmium battery. The power supply may be or include another form of charge storage device such as a capacitor. Optionally, the power supply may require recharging and be configured for many cycles of charge and discharge. The power supply may have a capacity that allows for the storage of enough energy for one or more user experiences; for example, the power supply may have sufficient capacity to allow for the continuous generation of aerosol for a period of around six minutes, corresponding to the typical time taken to smoke a conventional cigarette, or for a period that is a multiple of six minutes. In another example, the power supply may have sufficient capacity to allow for a predetermined number of puffs or discrete activations of the heating assembly. Preferably, the power supply further may have sufficient capacity to allow for any suitable number of actuations of the haptic output elements.

The aerosol-generating system or device may be or include a handheld aerosol-generating system. The handheld aerosol-generating system may be configured to allow a user to puff on a mouthpiece to draw an aerosol through the mouth end opening. The aerosol-generating system may have a size comparable to a conventional cigar or cigarette. The aerosol-generating system optionally may have a total length between about 30 mm and about 150 mm. The aerosol-generating system may have an external diameter between about 5 mm and about 30mm.

Optionally, the housing may be elongate. The housing may comprise any suitable material or combination of materials. Examples of suitable materials include metals, alloys, plastics or composite materials containing one or more of those materials, or thermoplastics that are suitable for food or pharmaceutical applications, for example polypropylene, polyetheretherketone (PEEK) and polyethylene. The material may be light and non-brittle. One or more of the haptic output elements can be coupled to any suitable portion of the housing.

The cartridge, control body or aerosol-generating system or device may comprise a puff detector in communication with the control circuitry. The puff detector may be configured to detect when a user draws through the airflow path. Additionally, or alternatively, the cartridge, control body or aerosol-generating system may comprise a temperature sensor in communication with the control circuitry. The cartridge, control body or aerosol-generating system or device may comprise a user input, such as a switch or button. The user input may enable a user to turn the system on and off. Optionally, the user input may be coupled to one or more of the haptic output elements. Additionally, or alternatively, the cartridge, control body or aerosol-generating system or device optionally may comprise indication means for indicating the determined amount of aerosol-forming substrate held in the reservoir to a user. The control circuitry may be configured to activate the indication means after a determination of the amount of aerosol-forming substrate held in the reservoir has been made. The indication means optionally may comprise one or more of lights, such as light emitting diodes (LEDs), a display, such as an LCD display and audible indication means, such as a loudspeaker or buzzer and vibrating means. The control circuitry may be configured to light one or more of the lights, display an amount on the display, emit sounds via the loudspeaker or buzzer and vibrate the vibrating means.

Preferably, the control circuitry is configured to independently actuate each of the haptic output elements so as to convey suitable information to the user. For example, the control circuitry optionally may be configured to independently actuate each of the haptic responsive to one or more of the following: the user turning on the system or device; the user turning off the system or device; the reservoir containing sufficient liquid or gel for a user experience; the reservoir containing insufficient liquid or gel for a user experience; the aerosol-generating element heating up; the aerosol-generating element being sufficiently heated to generate an aerosol; the battery level being low; the battery level being sufficient for a user experience; or indicating any other suitable system status or responsive to any other suitable user input.

The aerosol-forming substrate can have any suitable composition. For example, the aerosol-forming substrate may comprise nicotine. The nicotine containing aerosol-forming substrate may be or include a nicotine salt matrix. The aerosol-forming substrate may comprise plant-based material. The aerosol-forming substrate may comprise tobacco. The aerosol-forming substrate may comprise a tobacco-containing material containing volatile tobacco flavour compounds, which are released from the aerosol-forming substrate upon heating. The aerosol-forming substrate may comprise homogenised tobacco material. The aerosol-forming substrate may comprise a non-tobacco-containing material. The aerosol-forming substrate may comprise homogenised plant-based material.

The aerosol-forming substrate may comprise one or more aerosol-formers. An aerosol-former is any suitable known compound or mixture of compounds that, in use, facilitates formation of a dense and stable aerosol and that is substantially resistant to thermal degradation at the temperature of operation of the system. Examples of suitable aerosol formers include glycerine and propylene glycol. Suitable aerosol-formers are well known in the art and include, but are not limited to: polyhydric alcohols, such as triethylene glycol, 1 ,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. The aerosol-forming substrate may comprise water, solvents, ethanol, plant extracts and natural or artificial flavours. The aerosol-forming substrate may comprise nicotine and at least one aerosol former. The aerosol former may be glycerine or propylene glycol. The aerosol former may comprise both glycerine and propylene glycol. The aerosol-forming substrate may have a nicotine concentration of between about 0.5% and about 10%, for example about 2%.

It should be appreciated that the present haptic output elements are not limited to use with aerosol-generating systems or devices configured for use with liquid or gel aerosol-forming substrates. For example, in other configurations the present haptic output elements can be used with or included in aerosol-generating systems or devices that are configured for use with a solid aerosol-forming substrate. One type of aerosol-generating element that can be used with a solid-aerosol forming substrate includes a heater configured to be inserted into a solid aerosol-forming substrate, such as a plug of tobacco.

In some configurations, the heater is substantially blade-shaped for insertion into the aerosol-forming substrate and optionally has a length of between 10 mm and 60 mm, a width of between 2 mm and 10 mm, and a thickness of between 0.2 mm and 1 mm. A preferred length may be between 15 mm and 50 mm, for example between 18 mm and 30 mm. A preferred length may be about 19 mm or about 20 mm. A preferred width may be between 3 mm and 7 mm, for example between 4 mm and 6 mm. A preferred width may be about 5 mm. A preferred thickness may be between 0.25 mm and 0.5 mm. A preferred thickness may be about 0.4 mm. The heater can include an electrically-insulating heater substrate and an electrically-resistive heating element supported by the heater substrate. A through-hole optionally may be defined through the thickness of the heater. The heater mount may provide structural support to the heater and may allow the heater to be located within the aerosol-generating device. The heater mount optionally may be formed from a mouldable material that is moulded around a portion of the heater and may extend through the though-hole to couple to the heater to the heater mount. The heater optionally may have a tapered or pointed end to facilitate insertion into an aerosol-forming substrate.

The heater mount is preferably moulded to a portion of the heater that does not significantly increase in temperature during operation. Such a portion may be termed a holding portion and the heating element may have lower resistivity at this portion so that it does not heat up to a significant degree on the passage of an operational current. The through-hole may be located in the holding portion. The through-hole, if provided, may be formed in the heater before or after the electrically-resistive heating element is formed on the heater substrate. A device may be formed by fixing or coupling a heating assembly to, or within, a housing. The through-hole may be formed by machining, for example by laser machining or by drilling.

The heater mount may provide structural support to the heater and allows it to be securely fixed within an aerosol-generating device. The use of a mouldable material such as a mouldable polymer allows the heater mount to be moulded around the heater and thereby firmly hold the heater. It also allows the heater mount to be produced with a desired external shape and dimensions in an inexpensive manner.

Advantageously, the heating element may be formed from different materials. A first part, or heating part, of the heating element (i.e. that portion supported by the insertion or heating portion of the heater) may be formed from a first material and a holding part of the heating element (i.e. that part supported by a holding portion of the heater) may be formed from a second material, wherein the first material has a greater electrical resistivity coefficient than the second material. For example, the first material may be Ni-Cr (Nickel-Chromium), platinum, tungsten or alloy wire and the second material may be gold or silver or copper. The dimensions of the first and second parts of the heating element may also differ to provide for a lower electrical resistance per unit length in the second portion.

The heater substrate is formed from an electrically insulating material and may be a ceramic material such as Zirconia or Alumina. The heater substrate may provide a mechanically stable support for the heating element over a wide range of temperatures and may provide a rigid structure suitable for insertion into an aerosol-forming substrate. The heater substrate comprises a planar surface on which the heating element is positioned and may comprise a tapered end configured to allow for insertion into an aerosol-forming substrate. The heater substrate advantageously has a thermal conductivity of less than or equal to 2 Watts per metre Kelvin.

The aerosol-generating device preferably comprises a housing defining a cavity surrounding an insertion portion of the heater. The cavity is configured to receive an aerosol-forming article containing an aerosol-forming substrate. The heater mount may form a surface closing one end of the cavity.

In some configurations, the device is preferably a portable or handheld device that is comfortable to hold between the fingers of a single hand.

The power supply of the device may be any suitable power supply, for example a DC voltage source such as a battery. In one embodiment, the power supply is a Lithium-ion battery. Alternatively, the power supply may be a Nickel-metal hydride battery, a Nickel cadmium battery, or a Lithium based battery, for example a Lithium-Cobalt, a Lithium-Iron-Phosphate, Lithium Titanate or a Lithium-Polymer battery.

The device preferably comprises a control element. The control element may be a simple switch. Alternatively the control element may be electric circuitry and may comprise one or more microprocessors or microcontrollers, which may be configured to control the heater as well as independently control each of the haptic output elements.

The disclosure provides an aerosol-generating system comprising an aerosol-generating device as described above and one or more aerosol-forming articles configured to be received in a cavity of the aerosol-generating device.

During a usage session, an aerosol-generating article containing the aerosol-forming substrate may be partially contained within the aerosol-generating device. The aerosol-generating article may be substantially cylindrical in shape. The aerosol-generating article may be substantially elongate. The aerosol-generating article may have a length and a circumference substantially perpendicular to the length. The aerosol-forming substrate may be substantially cylindrical in shape. The aerosol-forming substrate may be substantially elongate. The aerosol-forming substrate may also have a length and a circumference substantially perpendicular to the length. The aerosol-generating article may have a total length between approximately 30 mm and approximately 100 mm. The aerosol-generating article may have an external diameter between approximately 5 mm and approximately 12 mm.

The solid aerosol-forming substrate may comprise a tobacco-containing material containing volatile tobacco flavour compounds which are released from the substrate upon heating. Alternatively, the solid aerosol-forming substrate may comprise a non-tobacco material. The solid aerosol-forming substrate may further comprise an aerosol former that facilitates the formation of a dense and stable aerosol. Examples of suitable aerosol formers are glycerine and propylene glycol.

The solid aerosol-forming substrate may comprise, for example, one or more of: powder, granules, pellets, shreds, spaghettis, strips or sheets containing one or more of: herb leaf, tobacco leaf, fragments of tobacco ribs, reconstituted tobacco, homogenised tobacco, extruded tobacco, cast leaf tobacco and expanded tobacco. The solid aerosol-forming substrate may be in loose form, or may be provided in a suitable container or cartridge. Optionally, the solid aerosol-forming substrate may contain additional tobacco or non-tobacco volatile flavour compounds, to be released upon heating of the substrate. The solid aerosol-forming substrate may also contain capsules that, for example, include the additional tobacco or non-tobacco volatile flavour compounds and such capsules may melt during heating of the solid aerosol-forming substrate.

As used herein, homogenised tobacco refers to material formed by agglomerating particulate tobacco. Homogenised tobacco may be in the form of a sheet. Homogenised tobacco material may have an aerosol-former content of greater than 5% on a dry weight basis. Homogenised tobacco material may alternatively have an aerosol former content of between 5% and 30% by weight on a dry weight basis. Sheets of homogenised tobacco material may be formed by agglomerating particulate tobacco obtained by grinding or otherwise combining one or both of tobacco leaf lamina and tobacco leaf stems. Alternatively, or in addition, sheets of homogenised tobacco material may comprise one or more of tobacco dust, tobacco fines and other particulate tobacco by-products formed during, for example, the treating, handling and shipping of tobacco. Sheets of homogenised tobacco material may comprise one or more intrinsic binders, that is tobacco endogenous binders, one or more extrinsic binders, that is tobacco exogenous binders, or a combination thereof to help agglomerate the particulate tobacco; alternatively, or in addition, sheets of homogenised tobacco material may comprise other additives including, but not limited to, tobacco and non-tobacco fibres, aerosol-formers, humectants, plasticisers, flavourants, fillers, aqueous and non-aqueous solvents and combinations thereof.

Optionally, the solid aerosol-forming substrate may be provided on or embedded in a thermally stable carrier. The carrier may take the form of powder, granules, pellets, shreds, spaghettis, strips or sheets. Alternatively, the carrier may be a tubular carrier having a thin layer of the solid substrate deposited on its inner surface, or on its outer surface, or on both its inner and outer surfaces. Such a tubular carrier may be formed of, for example, a paper, or paper like material, a non-woven carbon fibre mat, a low mass open mesh metallic screen, or a perforated metallic foil or any other thermally stable polymer matrix.

In some configurations, the aerosol-forming substrate comprises a gathered crimpled sheet of homogenised tobacco material. As used herein, the term 'crimped sheet' denotes a sheet having a plurality of substantially parallel ridges or corrugations. Preferably, when the aerosol-generating article has been assembled, the substantially parallel ridges or corrugations extend along or parallel to the longitudinal axis of the aerosol-generating article. This advantageously facilitates gathering of the crimped sheet of homogenised tobacco material to form the aerosol-forming substrate. However, it will be appreciated that crimped sheets of homogenised tobacco material for inclusion in the aerosol-generating article may alternatively or in addition have a plurality of substantially parallel ridges or corrugations that are disposed at an acute or obtuse angle to the longitudinal axis of the aerosol-generating article when the aerosol-generating article has been assembled. In certain embodiments, the aerosol-forming substrate may comprise a gathered sheet of homogenised tobacco material that is substantially evenly textured over substantially its entire surface. For example, the aerosol-forming substrate may comprise a gathered crimped sheet of homogenised tobacco material comprising a plurality of substantially parallel ridges or corrugations that are substantially evenly spaced-apart across the width of the sheet.

The solid aerosol-forming substrate may be deposited on the surface of the carrier in the form of, for example, a sheet, foam, gel or slurry. The solid aerosol-forming substrate may be deposited on the entire surface of the carrier, or alternatively, may be deposited in a pattern in order to provide a non-uniform flavour delivery during use.

It should be appreciated that although certain configurations described herein include aerosol-generating elements that generate aerosols via resistive heating, any suitable aerosol-generating element can be used, for example an inductive heating arrangement.

In a second embodiment of the invention, there is provided a method for generating an output in an aerosol-generating system. The aerosol-generating system includes a housing. The housing optionally comprises an air inlet, an air outlet, and an airflow path extending therebetween. The aerosol-generating system includes an aerosol-generating element disposed within the housing and configured to generate an aerosol. The method comprises providing a plurality of haptic output elements. The method comprises providing a circuit operably coupled to the plurality of haptic output elements. The method comprises independently actuating, by the circuit, each haptic output element of the plurality of output elements.

Features of the aerosol-generating system of the first embodiment of the invention may be applied to the second embodiment of the invention.

Configurations of the invention will now be described in detail, by way of example only, with reference to the accompanying drawings, in which:
Figure 1 is a schematic illustration of a cross-section of an aerosol-generating system including haptic output elements in accordance with the invention;
Figure 2 is a schematic illustration of a cross-section of another aerosol-generating system including haptic output elements in accordance with the invention;
Figure 3 illustrates a flow of operations in an exemplary method, in accordance with the invention.

Configurations provided herein relate to an improved interface for an aerosol-generating system. The interface preferably includes a plurality of haptic output elements respectively configured to convey information to a user via the user's sense of touch. Complex information can be conveyed to the user by individually activating selected ones of the haptic output elements. Optionally, the interface further can be configured to detect the status of the user's interaction with the system, such that information that is appropriate to the context in which the user is using the aerosol-generating system can be conveyed to the user by individually activating selected ones of the haptic output elements.

Advantageously, the present haptic output elements may provide for discreet, readily understandable interactions between a user and one or more devices within an aerosol-generating system. For example, the present haptic output elements may be configured so as to provide readily understandable information substantially only to the user of the aerosol-generating system with reduced or minimal distractions to other people nearby. Additionally, or alternatively, the present haptic output elements can convey more complex information to the user than, for example, a single visual signal, a single auditory signal, or a single vibrational signal. Such information may include, but is not limited to, temperature of an aerosol-generating element, battery status, elapsed waiting time, or remaining waiting time. The haptic output elements can be distributed over one or more devices within an aerosol-generating system, and each of the haptic output elements can be activated individually. As such, information can be respectively conveyed by haptic output elements that are in different locations than one another on a given device of the system, and even may be on different devices than one another within the system. Such information can represent, for example, different states, levels, or progress in the state of the system or a device therein.

Furthermore, the present haptic output elements may convey information to a user in a more effective way than, for example, a single visual signal, a single auditory signal, or a single vibrational signal. For example, the information may be conveyed responsive to a specific user request or to a targeted notification. For example, the system optionally is configured to determine whether the user is holding a particular device of the system (such as an aerosol-generating device). For a targeted notification, the system therein may be configured to selectively activate one or more of the haptic output elements of that particular device responsive to determining that the user is holding the particular device, and to selectively activate one or more others of the haptic output elements of another device of the system responsive to determining that the user is not holding the particular device. Such a targeted notification can be used to convey information to the user that is relevant to the context in which the user is using the system at a given time. Illustratively, if the aerosol-generating device is warmed up and ready for use but determined not to be held by the user, the user can be notified via one or more haptic output elements on one or more other devices of the system (which are not the aerosol-generating device itself) that the aerosol-generating device is warmed up and ready for use. As such, the user's experience and device management may be improved.

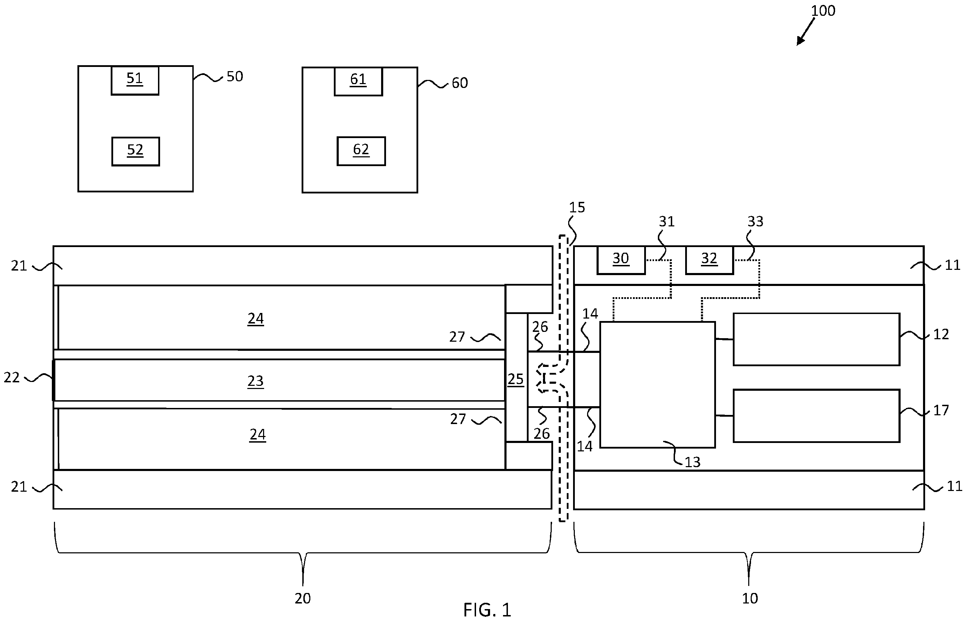

The present haptic output elements may be used in any suitable devices within an aerosol-generating system, such as in any suitable combination of an aerosol-generating device and one or more peripheral devices. For example, Figure 1 is a schematic illustration of an aerosol-generating system 100 including a plurality of haptic output elements 30, 51, 61 in accordance with the invention. The system 100 comprises a cartridge 20 containing a liquid or gel aerosol-forming substrate, a control body 10, and any suitable number of peripheral devices, for example first peripheral device 50 including haptic output element 51 and communication interface 52, and second peripheral device 60 including haptic output element 61 and communication interface 62. Optionally, first and second peripheral devices 50, 60 each is independently selected from the group consisting of a phone, a smartphone, a tablet, a smart watch, a smart bracelet, a fitness tracker, another aerosol-generating device, a computer, an augmented reality or virtual reality headset, and wireless headphones. A connection end of the cartridge 20 is removably connected to a corresponding connection end of the control body 10.

The control body 10 includes housing 11, disposed within which is a battery 12, which in one example is a rechargeable lithium ion battery, control circuitry 13, communication interface 17 coupled to control circuitry 13, one or a plurality of haptic output elements 30 coupled to control circuitry 13 via respective electrical interconnect(s) 31, and one or a plurality of optional sensors 32 coupled to control circuitry 13 via respective electrical interconnect(s) 33. The control body 10 can be configured so as to independently actuate each of haptic output element(s) 30, 51, and 61. For example, control circuitry 13 can be configured so as to individually actuate haptic output element(s) 30 by applying appropriate signals to respective electrical interconnect(s) 31. Control circuitry 13 optionally can be configured so as to receive user input from one or more of sensors 32 via electrical interconnect(s) 33.

Additionally, or alternatively, control circuitry 13 can be configured so as to individually actuate haptic output element 51 by transmitting an appropriate signal to communication interface 52 of first peripheral device 50 via communication interface 17. Additionally, or alternatively, control circuitry 13 can be configured so as to actuate haptic output element 61 by transmitting an appropriate signal to communication interface 62 of second peripheral device 60 via communication interface 17. Communication interface 17 can be powered by battery 12. Communication interface 52 of first peripheral device 50 can be powered by a battery or other power source (not specifically illustrated) of first peripheral device 50. Communication interface 62 of second peripheral device 60 can be powered by a battery or other power source (not specifically illustrated) of second peripheral device 60. First peripheral device 50 can include appropriate circuitry (not specifically illustrated) configured to actuate haptic output element 51 responsive to the signal received from control circuitry 13. Second peripheral device 60 can include appropriate circuitry (not specifically illustrated) configured to actuate haptic output element 61 responsive to the signal received from control circuitry 13.

Communication interfaces 17, 52, and 62 can be configured so as respectively to transmit signals between control circuitry 13 and first and second peripheral devices 50, 60 using any suitable mode of communication. Such communication can include, for example, physical or magnetic contact with a connector or wired connection, such as USB cable, lightning connector, HDMI cable, or AUX cable. Additionally, or alternatively, such communication can include, for example, a wireless connection, such as near frequency communication (NFC), Bluetooth, Bluetooth low-energy, Wireless USB, Wi-Fi, White-Fi, WiFi HalLow, Wi-FAR, WRAN, WLAN, LPWAN (such as Sigfox, LoRa, INGenu, Waviot, NB-lot, LTE-M, Telensa, CYANconnode, or Weightless), WAN, a phone network or data connection (such as GPRS, LTD, 3G, 4G, or 5G), GPS, satellite, ultra wide band, RFID, ZigBee, RuBee, TransferJet, radiofrequency, or z-wave. Additionally, or alternatively, such communication can include, for example, optical communication such as infrared, li-fi, or the like; sound based communication, such as sonic or ultrasonic communication; or magnetic induction-based communication, such as near field magnetic induction communication (NFMI).

At least the cartridge 20 and control body 10 of system 100 are portable. For example, when coupled to one another, the cartridge 20 and control body 10 of system 100 can have a size comparable to a conventional cigar or cigarette. For example, when coupled to one another, the cartridge 20 and control body 10 of system 100 preferably are sized and shaped so as to be handheld, and preferably sized and shaped so as to be holdable in one hand, e.g., between a user's fingers.

The cartridge 20 comprises a housing 21 containing a heating assembly 25 and a reservoir 24. A liquid or gel aerosol-forming substrate is held in the reservoir 24. The upper portion of reservoir 24 is connected to the lower portion of the reservoir 24 illustrated in Figure 1. The heating assembly 25 receives substrate from reservoir 24 and heats the substrate to generate a vapour, e.g., includes a resistive heating element coupled to controller 13 via electrical interconnects 26, 14 so as to receive power from battery 12. One side of heating assembly 25 is in fluidic communication with reservoir 24 (for example, via fluidic channels 27) so as to receive the aerosol-forming substrate from reservoir 24, e.g., by capillary action. The heating assembly 25 is configured to heat the aerosol-forming substrate to generate a vapour.

In the illustrated configuration, an air flow path 23 extends through the cartridge 20 from air inlet 15 (optionally which may be between control body 10 and cartridge 20), past the heating assembly 25, and through a path 23 through reservoir 24 to a mouth end opening 22 in the cartridge housing 21. The system 100 is configured so that a user can puff on the mouth end opening 22 of the cartridge 20 to draw aerosol into their mouth. In operation, when a user puffs on the mouth end opening 22, air is drawn into and through the airflow path 23 from the air inlet 15 and past the heating assembly 25 as illustrated in dashed arrows in Figure 1, and to the mouth end opening 22. The control circuitry 13 controls the supply of electrical power from the battery 12 to the cartridge 20 via electrical interconnects 14 (in control body 10) coupled to electrical interconnects 26 (in cartridge 20) when the system is activated. This in turn controls the amount and properties of the vapour produced by the heating assembly 25. The control circuitry 13 may include an airflow sensor (not specifically illustrated) and the control circuitry may 13 supply electrical power to the heating assembly 25 when the user puffs on the cartridge 20 as detected by the airflow sensor. This type of control arrangement is well established in aerosol-generating systems such as inhalers and e-cigarettes. When a user puffs on the mouth end opening 22 of the cartridge 20, the heating assembly 25 is activated and generates a vapour that is entrained in the air flow passing through the air flow path 23. Optionally, the vapour at least partially cools within the airflow path 23 to form an aerosol within the airflow path, which is then drawn into the user's mouth through the mouth end opening 22. In some configurations, the vapour at least partially cools within the user's mouth to form an aerosol within the user's mouth.

Each of the haptic output elements 30, 51, 61 is configured to provide information to a user via the user's sense of touch. The haptic output elements 30, 51, 61 need not be the same as one another. For example, each of the haptic output elements 30, 51, 61 independently can be selected from the group consisting of a mechanical actuator, a piezoelectric actuator, or a thermal output element. An exemplary mechanical actuator is a vibrational actuator. Examples of vibrational actuators that suitably can be included in one or more of the haptic output elements 30, 51, 61 include, but are not limited to, eccentric rotary mass actuators and linear resonant actuators. Examples of piezoelectric actuators that suitably can be included in one or more of the haptic output elements include, but are not limited to, piezoelectric disks, piezoelectric benders, piezoelectric resonant elements, and electrovibration elements. Examples of thermal output elements that suitably can be included in one or more of the haptic output elements 30, 51, 61 include, but are not limited to, resistive heaters and thermoelectric elements (such as Peltier elements). It should be appreciated that haptic output elements 30, 51, 61 may be located at any suitable portion of aerosol-generating system 100. For example, haptic output element(s) 30 can be located at any suitable location of control body 10 or cartridge 20, e.g., can be coupled to any suitable portion of housing 11 or housing 21 so as to be sensed by the user at any suitable outer portion of cartridge 20 or control body 10, or any other suitable portion of system 100 that may be touched by the user, for example by the user's lip, finger, or palm during use.

Optionally, control circuitry 13 may be configured so as to individually actuate one or more of haptic output element(s) 30, 51, and 61 responsive to input received via one or more sensors 32. In one particular configuration, one or more of the sensor(s) 32 optionally is configured to generate and transmit to control circuitry 13 a signal indicating whether the user is holding control body 10 or cartridge 20. Such a signal can communicate to the control circuitry information about the context in which the user is using the system 100, for example whether the user's palm, finger, or lip is in contact with control body 10 or cartridge 20 and thus whether information may be readily conveyed to such palm, finger, or lip via haptic output element(s) 30 or whether such information instead should be conveyed to the user via one or both of haptic output element(s) 51 or 61. Control circuitry 13 can be configured to, at least partially responsive to such signal indicating that the user is holding control body 10 or cartridge 20, actuate haptic output element 30 so as to communicate information to the user thereby. Control circuitry 13 can be configured to, at least partially responsive to such signal indicating that the user is not holding control body 10 or cartridge 20, actuate one or more of haptic output elements 51 or 61 so as to communicate information to the user thereby. Additionally, or alternatively, each of the sensor(s) 32 optionally is selected from the group consisting of touch sensor, a pressure sensor, an optical sensor, and a motion sensor. Exemplary sensor(s) 32 individually may include, but are not limited to, button, touch sensor, switch, joystick, trackball, touch screen, microphone, dial, knob, pressure sensor, capacitive sensor, airflow sensor, infrared sensor, scanner, optical sensor, camera, fingerprint scanner or other biometric sensor, chemical sensor, temperature sensor, tilt sensor, or motion sensor. Sensors that may be particularly useful for detecting whether the user is holding the device include, but are not limited to, a touch sensor such as a capacitive touch sensor, conductive touch sensor, resistive touch sensor, pressure sensor, optical sensor such as an infrared sensor, light detector, or camera, or a motion sensor such as a tilt sensor, accelerometer, or gyroscopic sensor. Note that any suitable number and type of such sensor(s) 32 additionally or alternatively may be provided on one or both of peripheral device 50 or peripheral device 60.

In one non-limiting configuration, one or more of sensor(s) 32 comprises a user actuatable input element. Optionally, at least one of the haptic output element(s) 30 is located sufficiently close to the user actuatable input element (s) 32 that the user can perceive the actuation of the haptic output element(s) while or following actuation of the user actuatable input element(s) 32.

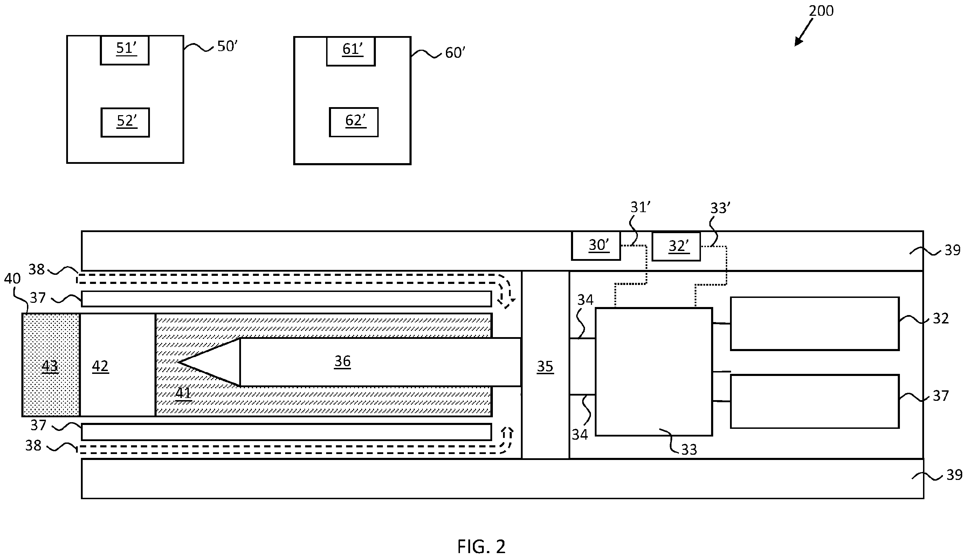

Figure 2 is a schematic illustration of an alternative aerosol-generating system 200 including optional first and second peripheral devices 50', 60' which respectively can be configured similarly as first and second peripheral devices 50, 60 described with reference to Figure 1, haptic output elements 30', 51', 61' which respectively can be configured similarly as haptic output elements 30', 51', 61' described with reference to Figure 1, and optional sensor(s) 32' which can be configured similarly as sensor 32 described with reference to Figure 1.

The system 200 comprises an aerosol-generating device having a housing 39, and an aerosol-forming article 40, for example a tobacco stick. The aerosol-forming article 40 includes an aerosol-forming substrate 41 that is pushed inside the housing 39 to come into thermal proximity with a portion of a heater 36. Responsive to heating by heater 36, the aerosol-forming substrate 41 will release a range of volatile compounds at different temperatures.

Within the housing 39 there is an electrical energy supply 32, for example a rechargeable lithium ion battery. A controller 33 is connected to the heater 36 via electrical interconnect 34, to the electrical energy supply 32, to one or haptic output element(s) 30' via electrical interconnect(s) 31', to one or more sensor(s) 32' via electrical interconnects 33', and to communication interface 37 configured similarly as communication interface 17. The controller 33 controls the power supplied to the heater 36 in order to regulate its temperature. Typically the aerosol-forming substrate is heated to a temperature of between 250 and 450 degrees centigrade. Additionally, controller 33' can control actuation of haptic output element(s) 30' in a manner such as described herein with reference to Figure 1, optionally in response to signals received from sensor 32'. Additionally, controller 33' optionally can be in communication with peripheral devices 50', 60' via communication interfaces 37, 52', 62' in a manner similar to that described with reference to Figure 1 so as to send signals causing respective and independent
actuation of haptic output elements 51', 61'.

The housing 39 of aerosol-generating device defines a cavity, open at the proximal end (or mouth end), for receiving an aerosol-generating article 40 for consumption. Optionally, system 200 includes element(s) 37 disposed within the cavity which, together with housing 39, form(s) air inlet channels 38. The distal end of the cavity is spanned by a heating assembly comprising heater 36 and a heater mount 35. The heater 36 is retained by the heater mount 35 such that an active heating area (heating portion) of the heater 36 is located within the cavity. In one example, the heater 36 includes a through hole (not specifically illustrated) through which material of heater mount 35 extends so as to further secure heater 36 in place. The active heating area of the heater 36 is positioned within a distal end of the aerosol-generating article 40 when the aerosol-generating article 40 is fully received within the cavity. The heater mount 35 optionally may be formed from polyether ether ketone and may be moulded around a holding portion of the heater. The heater 36 optionally is shaped in the form of a blade terminating in a point. That is, the heater 36 optionally has a length dimension that is greater than its width dimension, which is greater than its thickness dimension. First and second faces of the heater 36 may be defined by the width and length of the heater.

An exemplary aerosol-forming article 40, as illustrated in Figure 2, can be described as follows. The aerosol-generating article 40 comprises three or more elements: an aerosol-forming substrate 41, an intermediate element 42, and a mouthpiece filter 43. These elements may be arranged sequentially and in coaxial alignment and assembled by a cigarette paper (not specifically illustrated) to form a rod. In one nonlimiting configuration, when assembled, the aerosol-forming article 40 may be 45 millimetres long and have a diameter of 7 millimetres, although it should be appreciated that any other suitable combination of dimensions can be used.

The aerosol-forming substrate 41 optionally comprises a bundle of crimped cast-leaf tobacco wrapped in a filter paper (not shown) to form a plug. The cast-leaf tobacco includes one or more aerosol formers, such as glycerine. The intermediate element 42 may be located immediately adjacent the aerosol-forming substrate 41 The intermediate element 42 may be configured so as to locate the aerosol-forming substrate 41 towards the distal end of the article 40 so that it can be contacted with the heater 36. Additionally, or alternatively, the intermediate element 42 may be configured so as to inhibit or prevent the aerosol-forming substrate 41 from being forced along the article 40 towards the mouthpiece when heater 36 is inserted into the aerosol-forming substrate 41. Additionally, or alternatively, the intermediate element 42 may be configured so as to allow volatile substances released from the aerosol-forming substrate 41 to pass along the article towards the mouthpiece filter 43. The volatile substances may cool within the transfer section to form an aerosol. In one nonlimiting configuration, intermediate element 42 may include or may be formed from a tube of cellulose acetate directly coupled to the aerosol-forming substrate. In one nonlimiting configuration, the tube defines an aperture having a diameter of 3 millimetres. Additionally, or alternatively, intermediate element 42 may include or be formed from a thin-walled tube of 18 millimetres in length directly coupled to the mouthpiece filter 43. In one exemplary configuration, intermediate element 42 includes both such tubes. The mouthpiece filter 43 may be a conventional mouthpiece filter, e.g., formed from cellulose acetate, and having a length of approximately 7.5 millimetres. Elements 41, 42, and 43 optionally are assembled by being tightly wrapped within a cigarette paper (not specifically illustrated), e.g., a standard (conventional) cigarette paper having standard properties or classification. The paper in this specific embodiment is a conventional cigarette paper. The interface between the paper and each of the elements 41, 42, 43 locates the elements and defines the aerosol-forming article 40.

As the aerosol-generating article 40 is pushed into the cavity, the tapered point of the heater 36 engages with the aerosol-forming substrate 41. By applying a force to the aerosol-forming article 40, the heater 36 penetrates into the aerosol-forming substrate 41. When the aerosol-forming article 40 is properly engaged, the heater 36 is inserted into the aerosol-forming substrate 42. When the heater 36 is actuated, the aerosol-forming substrate 41 is warmed and volatile substances are generated or evolved. As a user draws on the mouthpiece filter 43, air is drawn into the aerosol-forming article 40 via air inlet channels 38 and the volatile substances condense to form an inhalable aerosol. This aerosol passes through the mouthpiece filter 43 of the aerosol-forming article 40 and into the user's mouth.

It should be appreciated that in aerosol-generating systems provided herein, of which aerosol-generating system 100 described with reference to Figure 1 and aerosol-generating system 200 described with reference to Figure 2 provide nonlimiting examples, haptic output elements of the the plurality of haptic output elements independently can be provided on any suitable device(s) within the system, and on any suitable element(s) of such device(s). For example, in some configurations, at least some haptic output elements of the plurality of haptic output elements optionally are coupled to the housing of the aerosol-generating device. Illustratively, one or more haptic output element(s) 30 are coupled to housing 11 of control body 10 of system 100, or one or more haptic output element(s) 30' are coupled to housing 39 of system 200. It should be appreciated that any suitable number of such haptic output elements can be coupled to the housing of an aerosol-generating device within an aerosol-generating system. For example, one haptic output element can be coupled to the housing of the aerosol-generating device. As another example, more than one haptic output element can be coupled to the housing of the aerosol-generating device. In various exemplary configurations, two or more, three or more, four or more, five or more, or even ten or more haptic output elements can be coupled to the housing of the aerosol-generating device. For example, between one and ten haptic output elements can be coupled to the housing of the aerosol-generating device, or between two and five output elements can be coupled to the housing of the aerosol-generating device. However, not all (or even any) haptic output elements necessarily are coupled to the housing of the aerosol-generating device. As one option, one or more of the haptic output elements may be coupled to one or more peripheral devices, and one or more of the haptic output elements may be coupled to the housing of the aerosol-generating device. As another option, all of the haptic output elements are coupled to one or more peripheral devices, and none of the haptic output elements are coupled to the aerosol-generating device. That is, some, all, or none of the haptic output elements can be coupled to the aerosol-generating device in an aerosol-generating system.

The haptic output elements coupled to a given device within the aerosol-generating system may have any suitable arrangement within that device. For example, the haptic output elements optionally may be distributed over the length of the device. The spacings between the different haptic output elements coupled to a given device may be unequal. Alternatively, the spacings between the different haptic output elements coupled to a given device may be equal. For example, any suitable number of the haptic output elements may be distributed evenly over the device to which they are coupled. One or more of the haptic output element(s) coupled to a given device may be located at the outer surface of the housing of that device, for example such that the haptic output element(s) are exposed. Additionally, or alternatively, one or more of the haptic output element(s) coupled to a given device may be located below the outer surface of the housing of that device, for example such that the haptic output element(s) are not exposed. Preferably, such haptic output elements are located sufficiently close to the outer surface of the housing that their actuation can be felt by a user holding that device or a portion thereof. One or more of the haptic output element(s) coupled to a given device may be located on a central (longitudinal) axis of that device.

The present aerosol-generating devices and systems optionally can include sensors that may be used to determine the status of the user's interaction with the aerosol-generating device or system and to provide information to the user that is relevant to that status. For example, system 100 includes one or more sensors 32 coupled to housing 11, and system 200 includes one or more sensors 32' coupled to housing 39. A first one of such sensor(s) 32, 32' optionally is configured to generate a first status signal responsive to a user holding the aerosol-generating system. A circuit, e.g., control circuit 13 or control circuit 33, is configured to actuate a first haptic output element of the plurality of haptic output elements responsive to the first status signal. In one example, the first haptic output element that is so actuated, is haptic output element 30 or 30' of the respective aerosol-generating device. Illustratively, it can be advantageous to actuate haptic output element 30 or 30' based upon the first status signal corresponding to the user holding the respective aerosol-generating device, because the user is already touching the device and thus readily may receive information via actuation of such haptic output element. Additionally, or alternatively, the device or system can give feedback to the user via one or more of the haptic output elements when a certain time has elapsed or state has been achieved and the user is detected to be holding the device. In some configurations, the first haptic output element that is so actuated is haptic output element 51 or 51' of the respective first peripheral device 50, 50' or haptic output element 61 or 61' of the respective second peripheral device 60, 60'. Illustratively, it can be advantageous to actuate haptic output element 51, 51', 61, or 61' based on the first status signal corresponding to the user not holding the respective aerosol-generating device, because the user is not touching the device and thus may more readily receive information from the respective peripheral devices than from the aerosol-generating device itself.

Any suitable status signals generated by sensors respectively coupled to the housing of the aerosol-generating device or to one or more peripheral devices (e.g., to the housings of such peripheral device(s)) can be used by the control circuitry to determine the context in which the user is using the aerosol-generating system and to provide information to the user in a manner appropriate to that context. For example, the first sensor optionally may be configured to generate a second status signal responsive to the user picking up the aerosol-generating device, e.g., as distinguished from the user already holding the device or not holding the device. The circuit (e.g., control circuitry 13 or 33) further is configured to actuate a second haptic output element of the plurality of haptic output elements responsive to the second status signal. The second haptic output element can be different from the first haptic output element. As such, based upon the user picking up the aerosol-generating device, the device may convey, via the second haptic output element, different information to the user, or the same information in a different way, to the user, than if the user had already been holding the device or not holding the device. Prior to being picked up by the user, the aerosol-generating device optionally may be in an idle or charging state, and upon detecting that the user is picking up the device, the device may change to an active state and may notify the user of such change in state via actuation of the second haptic output element.

Additionally, or alternatively, the aerosol-generating device optionally may include an input element (e.g., sensor 32 or sensor 32' or a user-actuatable input element) configured to generate a third status signal. The circuit (e.g., control circuitry 13 or 33) optionally further is configured to actuate a third haptic output element of the plurality of haptic output elements responsive to the third status signal. Additionally, or alternatively, the third haptic output element can be different from one or both of the first haptic output element and the second haptic output element. Based upon actuation of the input element, the device may convey, via the third haptic output element, different information to the user, or the same information in a different way, to the user, than if the user had picked up the device, or had already been holding the device or not holding the device. Nonlimiting examples of input elements and sensors are provided elsewhere herein.

Additionally, or alternatively, the aerosol-generating device optionally may include a communication interface (e.g., 17 or 37) in operable communication with the circuit (e.g., control circuitry 13 or 33). The circuit optionally may be configured to communicate with a peripheral device (e.g., peripheral device 50, 50', 60, or 60') via the communication interface (e.g., any suitable combination of 17, 52, and 62 or of 37, 52', and 62'). The peripheral device (e.g., peripheral device 50, 50', 60, or 60') optionally comprises a fourth haptic output element of the plurality of haptic output elements (e.g., haptic output element 51, 51', 61, or 61'). The circuit optionally further is configured to instruct the peripheral device, via the communication interface, to actuate the fourth haptic output element responsive to an absence of the first status signal. For example, as described above, the first status signal may correspond to the user holding the aerosol-generating device, responsive to which it may be preferable to convey information to the user via a haptic output element (e.g., element 30 or 30') coupled to the aerosol-generating device. An absence of the first status signal may correspond to the user not holding the aerosol-generating device, responsive to which it may be preferable to convey information to the user via a haptic output element (e.g., element 51, 51', 61, or 61') coupled to a peripheral device (e.g., peripheral device 50, 50', 60, or 60') in communication with the aerosol-generating device. As such, the aerosol-generating system may be configured so as to convey information to the user using haptic output elements that are appropriate to the context in which the user is using the system.

Additionally, or alternatively, optionally the peripheral device comprises a second sensor (not specifically illustrated) which may be configured similarly as sensor 32 or 32'. The second sensor optionally may be configured to generate a fifth status signal responsive to a user holding the peripheral device (e.g., peripheral device 50, 50', 60, or 60'). The circuit (e.g., control circuitry 13 or 33) optionally further is configured to instruct the peripheral device, via the communication interface(s) (e.g., (e.g., any suitable combination of 17, 37, 52, 52', 62, or 62'), to actuate the fourth output element responsive to the fifth status signal. Illustratively, the fifth status signal generated by the second sensor may correspond to the user holding the peripheral device that includes the second sensor, based upon which the haptic output element coupled to that peripheral device may be actuated so as to convey information to the user, e.g., in a manner appropriate to the context in which the user is using the system. Nonlimiting examples of peripheral devices are provided elsewhere herein.

In some configurations, an aerosol-generating system further comprises an aerosol-forming substrate, optionally wherein the aerosol-forming substrate comprises nicotine.

The present haptic output elements may be used to convey any suitable information to a user via the user's sense of touch. For example, control circuitry of the aerosol-generating device or system may be configured so as to actuate the haptic output element responsive to an input signal. The input signal can have any suitable source within the aerosol-generating device or system. For example, a condition of the aerosol-generating device can cause the circuit to generate an input signal based upon which the haptic output element is actuated. That is, the input signal optionally may correspond to a condition of the aerosol-generating device or to a context in which the user is using the aerosol-generating system. A variety of suitable conditions, statuses, and contexts readily may be envisioned.

Illustratively, the present aerosol-generating systems can be configured so as to individually actuate the haptic output elements in such a manner as to represent different states, levels, or progress in the state of the system.

For example, the different states, levels, or progress to be communication can be but is not limited to one or more of device battery status; power consumption; identification of an aerosol-generating article; depletion of an aerosol-generating article, nicotine, or other dosage; duration of one or more puffs; number of puffs; number of aerosol-generating articles; vapour density; vapour smoothness; vapour temperature; a vapour characteristic; total session time; exposure time; elapsed time; user health; user workout information; user heart rate; user lung capacity; device temperature; heating element temperature; power of heater; temperature of aerosol-generating element; power of aerosol-generating element; voltage of heater; voltage of aerosol-generating element; one or more environmental parameters; user identification; connection status; waiting time; elapsed waiting time; an activity of another device; a status of another device.

In one exemplary configuration, one haptic output element is activated on a specific location of the device to which it is coupled to indicate a specific status, level, or progress in the state of the device.

Additionally, or alternatively, optionally one or more haptic output elements are activated successively from one location to another adjacent location to indicate a specific status, level, or progress in the state of the device.

Additionally, or alternatively, optionally one or more haptic output elements are activated at the same time as one another, corresponding with a specific section of the device to which they are coupled to indicate a specific status, level, or progress in the state of the device.

Additionally, or alternatively, optionally one or more haptic output elements are activated at the same time as one another with one or more of a different intensity, different duration, different frequency, different program, or different pattern than one another to emphasize a specific section of the device to which they are coupled to indicate a specific status, level, or progress in the state of the device.

Additionally, or alternatively, the level of duration, frequency, program, or pattern which a haptic output element is actuated is used to emphasize a specific status, level, or progress in the state of the device to which the element is coupled.

An exemplary configurations, when the user is detected not to be holding the aerosol-generating device but optionally a certain time has elapsed or a certain state has been reached, the aerosol-generating device may be configured to convey information to the user via one or more haptic output elements coupled to one or more peripheral devices rather than via one or more haptic output elements coupled to the aerosol-generating device itself. The user may, for example, be wearing, carrying, holding, or using the peripheral device(s), or otherwise be in contact with such peripheral device(s) such that the user can feel actuation of a haptic output element coupled thereto. Optionally, such peripheral device(s) can include a sensor configured such as described herein, the output of which can be used to determine whether the user is in contact with such peripheral device(s) by suitable circuitry configured such as described herein. Based upon such determination of the context in which the user is using the system, the system can select an appropriate device for conveying information to the user using haptic output element(s). Optionally, the system can be configured so as to select devices for conveying such information based on a predefined priority. For example, the control circuitry of the aerosol-generating device may be in communication with a plurality of peripheral devices and may be configured so as to have a defined priority for sending information to the user through such peripheral devices. Optionally, such priority is user-defined and stored in an appropriate memory or circuitry of the system.

Optionally, the system can be configured so as to convey information to the user through one or more peripheral devices. Such peripheral devices can, but need not necessarily, include one or more of the present haptic output elements. Instead, such peripheral devices can be configured so as to convey information to the user via any suitable output elements. For example, the output element(s) of the peripheral device(s) may include haptic output elements be configured so as to convey information to the user by, for example, a vibration, a tap, a force, a temperature change (such as a heat pulse or a cold pulse), or an electrical signal. Additionally, or alternatively, the output element(s) may be configured so as to generate a visual signal such as a light signal, symbol, textual message, or the like, or an auditory signal such as a sound, series, of sounds, spoken message, or the like.

In one exemplary configuration, the peripheral device is a personal wearable or mobile device comprising a haptic output element for conveying the information. In another exemplary configuration, the peripheral device is a device the user is using at the moment, and conveys information to the user via a visual or auditory signal. In another exemplary configuration, the peripheral device is a personal wearable or mobile device comprising a haptic output element for conveying the information via the user's sense of touch when the user is not actively using the peripheral device and another output element for conveying the information via a visual or auditory signal when the user is actively using the peripheral device.

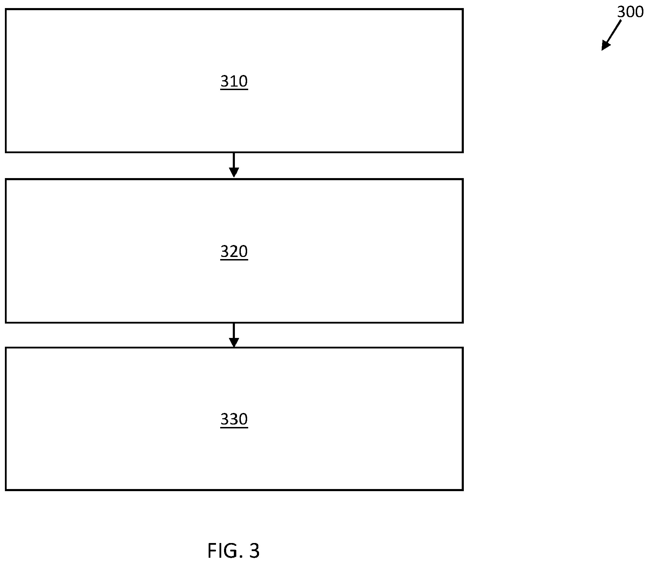

Figure 3 illustrates a flow of operations in an exemplary method 300. Although the operations of method 300 are described with reference to elements of systems 100 and 200, it should be appreciated that the operations can be implemented by any other suitably configured systems.

Method 300 includes providing a plurality of haptic output elements (310). Preferably, the plurality of haptic output elements are provided within and coupled to one or more devices within an aerosol-generating system. Such devices independently may include, but are not limited to, an aerosol-generating device and a peripheral device. The aerosol-generating device may include an aerosol-generating element configured to generate an aerosol using any suitable aerosol-forming substrate, such as a liquid, gel, or solid. The haptic output element may be provided as part of an interface that optionally includes any suitable combination of one or more other elements, such as one or more sensors, one or more input element (such as user actuatable input elements), or one or more logic circuits, in any suitable configuration relative to one another and relative to the housing of the aerosol-generating device or peripheral device. Nonlimiting examples of aerosol-generating devices and peripheral devices that may include haptic output elements are described above with reference to Figures 1 and 2.

Method 300 illustrated in Figure 3 includes providing a circuit coupled to the plurality of haptic output elements (320). For example, in some configurations such as described with reference to Figures 1 and 2, the haptic output element (30, 51, or 61 or 30', 51', or 61') may be coupled to the control circuitry of the aerosol-generating device (13 or 33) via suitable communication pathway, and the control circuitry is configured to actuate the haptic output element. Any other suitable circuit coupled to the haptic output element can be provided.

Method 300 illustrated in Figure 3 also includes independently actuating, by the circuit, each haptic output element of the plurality of haptic output elements (330). For example, in some configurations such as described with reference to Figures 1 and 2, the circuit optionally may actuate each of the haptic output elements responsive to any suitable condition, status, or use of one or more devices in the aerosol-generating system.

Although some configurations of the invention have been described in relation to a system comprising a control body and a separate but connectable cartridge, it should be clear that the elements suitably can be provided in a one-piece aerosol-generating system.

It should also be clear that alternative configurations are possible within the scope of the invention as defined in the appended claims.

For example, the present haptic output elements suitably may be integrated into any type of device or system, and are not limited to use in aerosol-generating devices and systems. Illustratively, the present haptic output elements may be included in medical devices, smartphones, or the like.

## Claims

1. An aerosol-generating device, comprising:
a housing (39) comprising an air inlet (38), an air outlet, and an airflow path extending therebetween;
an aerosol-generating element (36) disposed within the housing (39) and configured to generate an aerosol within the airflow path;
a plurality of haptic output elements;
a circuit (33) operably coupled to the plurality of haptic output elements and configured to independently actuate each haptic output element of the plurality of haptic output elements; and
a first sensor (32') coupled to the housing (39) and configured to generate a first status signal responsive to a user holding the aerosol-generating device,
wherein the circuit (33) is configured to actuate a first haptic output element (30') of the plurality of haptic output elements responsive to the first status signal.

2. An aerosol-generating device according to claim 1, wherein at least some haptic output elements of the plurality of haptic output elements are coupled to the housing (39).

3. An aerosol-generating device according to claim 1 or 2, wherein the first sensor (32') further is configured to generate a second status signal responsive to the user picking up the aerosol-generating device, and
wherein the circuit (33) further is configured to actuate a second haptic output element of the plurality of haptic output elements responsive to the second status signal.

4. An aerosol-generating device according to any one of the preceding claims, further comprising an input element configured to generate a third status signal, and
wherein the circuit (33) further is configured to actuate a third haptic output element of the plurality of haptic output elements responsive to the third status signal.

5. An aerosol-generating device according to claim 4, wherein the input element is selected from the group consisting of button, touch sensor, switch, joystick, trackball, touch screen, microphone, dial, knob, pressure sensor, capacitive sensor, airflow sensor, infrared sensor, scanner, optical sensor, camera, fingerprint scanner or other biometric sensor, chemical sensor, temperature sensor, tilt sensor, or motion sensor.

6. The aerosol-generating device according to any one of the preceding claims , wherein the first sensor (32') is selected from the group consisting of a touch sensor, a pressure sensor, an optical sensor, and a motion sensor.

7. An aerosol-generating device according to any one of the preceding claims, wherein the haptic output elements of the plurality of haptic output elements independently are selected from the group consisting of a mechanical actuator, a piezoelectric actuator, and a thermal output element.

8. An aerosol-generating device according to any one of the preceding claims, wherein the aerosol-generating element (36) comprises a heater.

9. An aerosol-generating system (200) comprising an aerosol-generating device according to any one of the preceding claims and an aerosol-generating substrate (41), wherein the aerosol-generating substrate (41) comprises nicotine.

10. An aerosol-generating system (200) comprising a device according to any one of the preceding claims and a peripheral device (50'), the device further comprising a communication interface (37) in operable communication with the circuit (33), wherein the circuit (33) is configured to communicate with the peripheral device (50') via the communication interface (37), and
wherein the peripheral device (50') comprises a fourth haptic output element (51') of the plurality of haptic output elements.

11. An aerosol-generating system (200) according to claim 10, wherein the circuit (33) further is configured to instruct the peripheral device (50'), via the communication interface (37), to actuate the fourth haptic output element (51') responsive to an absence of the first status signal.

12. An aerosol-generating system (200) according to claim 10 or claim 11, wherein the peripheral device comprises a second sensor configured to generate a fifth status signal responsive to a user holding the peripheral device, and
wherein the circuit (33) further is configured to instruct the peripheral device (50'), via the communication interface (37), to actuate the fourth output element responsive to the fifth status signal.

13. An aerosol-generating system (200) according to any one of claims 10-12, wherein the peripheral device is selected from the group consisting of a phone, a smartphone, a tablet, a smart watch, a smart bracelet, a fitness tracker, another aerosol-generating device, a computer, an augmented reality or virtual reality headset, and wireless headphones.

14. A method (300) for generating an output in an aerosol-generating system, the aerosol-generating system comprising a housing (39) comprising an air inlet (38), an air outlet, and an airflow path extending therebetween, and an aerosol-generating element (36) disposed within the housing (39) and configured to generate an aerosol within the airflow path, the method comprising:
providing a plurality of haptic output elements (310);
providing a circuit (33) operably coupled to the plurality of haptic output elements (320);
providing a first sensor (32') coupled to the housing (39) and configured to generate a first status signal responsive to a user holding the aerosol-generating device, and
independently actuating, by the circuit (33), a first haptic output element (30') of the plurality of output elements responsive to the first status signal (330).

## Patentansprüche

1. Aerosolerzeugungsvorrichtung, aufweisend:
ein Gehäuse (39), umfassend einen Lufteinlass (38), einen Luftauslass und einen sich dazwischen erstreckenden Luftstromweg;
ein innerhalb des Gehäuses (39) angeordnetes und zum Erzeugen eines Aerosols innerhalb des Luftstromweges ausgelegtes Aerosolerzeugungselement (36);
eine Vielzahl von haptischen Ausgabeelementen;
eine mit der Vielzahl von haptischen Ausgabeelementen betriebsfähig gekoppelte und zum unabhängigen Betätigen jedes haptischen Ausgabeelements der Vielzahl von haptischen Ausgabeelementen ausgelegte Schaltung (33); und einen ersten Sensor (32'), der mit dem Gehäuse (39) gekoppelt und zum Erzeugen eines ersten Statussignals in Reaktion auf das Halten der Aerosolerzeugungsvorrichtung durch einen Benutzer ausgelegt ist,
wobei die Schaltung (33) zum Betätigen eines ersten haptischen Ausgabeelements (30') der Vielzahl von haptischen Ausgabeelementen in Reaktion auf das erste Statussignal ausgelegt ist.

2. Aerosolerzeugungsvorrichtung nach Anspruch 1, wobei wenigstens einige haptische Ausgabeelemente der Vielzahl von haptischen Ausgabeelementen mit dem Gehäuse (39) gekoppelt sind.

3. Aerosolerzeugungsvorrichtung nach Anspruch 1 oder 2, wobei der erste Sensor (32') ferner zum Erzeugen eines zweiten Statussignals in Reaktion auf das Aufnehmen der Aerosolerzeugungsvorrichtung durch den Benutzer ausgelegt ist, und
wobei die Schaltung (33) ferner zum Betätigen eines zweiten haptischen Ausgabeelements der Vielzahl von haptischen Ausgabeelementen in Reaktion auf das zweite Statussignal ausgelegt ist.

4. Aerosolerzeugungsvorrichtung nach einem der vorhergehenden Ansprüche, ferner umfassend ein zum Erzeugen eines dritten Statussignals ausgelegtes Eingabeelement, und
wobei die Schaltung (33) ferner zum Betätigen eines dritten haptischen Ausgabeelements der Vielzahl von haptischen Ausgabeelementen in Reaktion auf das dritte Statussignal ausgelegt ist.

5. Aerosolerzeugungsvorrichtung nach Anspruch 4, wobei das Eingabeelement ausgewählt ist aus der Gruppe bestehend aus einer Taste, einem Berührungssensor, einem Schalter, einem Joystick, einem Trackball, einem Touchscreen, einem Mikrofon, einem Einstellrad, einem Knopf, einem Drucksensor, einem kapazitiven Sensor, einem Luftstromsensor, einem Infrarotsensor, einem Scanner, einem optischen Sensor, einer Kamera, einem Fingerabdruckscanner oder einem anderen biometrischen Sensor, einem chemischen Sensor, einem Temperatursensor, einem Kippsensor oder einem Bewegungssensor.

6. Aerosolerzeugungsvorrichtung nach einem beliebigen der vorhergehenden Ansprüche, wobei der erste Sensor (32') ausgewählt ist aus der Gruppe bestehend aus einem Berührungssensor, einem Drucksensor, einem optischen Sensor und einem Bewegungssensor.

7. Aerosolerzeugungsvorrichtung nach einem beliebigen der vorhergehenden Ansprüche, wobei die haptischen Ausgabeelemente der Vielzahl von haptischen Ausgabeelementen unabhängig voneinander ausgewählt sind aus der Gruppe bestehend aus einem mechanischen Aktor, einem piezoelektrischen Aktor und einem thermischen Ausgabeelement.

8. Aerosolerzeugungsvorrichtung nach einem der vorhergehenden Ansprüche, wobei das Aerosolerzeugungselement (36) eine Heizvorrichtung aufweist.

9. Aerosolerzeugungssystem (200), umfassend eine Aerosolerzeugungsvorrichtung nach einem der vorhergehenden Ansprüche und ein aerosolerzeugendes Substrat (41), wobei das aerosolerzeugende Substrat (41) Nikotin umfasst.

10. Aerosolerzeugungssystem (200), umfassend eine Vorrichtung nach einem der vorhergehenden Ansprüche und eine Peripherievorrichtung (50'), wobei die Vorrichtung ferner eine Kommunikationsschnittstelle (37) in betriebsfähiger Verbindung mit der Schaltung (33) aufweist,
wobei die Schaltung (33) für die Kommunikation mit der Peripherievorrichtung (50') über die Kommunikationsschnittstelle (37) ausgelegt ist, und
wobei die Peripherievorrichtung (50') ein viertes haptisches Ausgabeelement (51') aus der Vielzahl von haptischen Ausgabeelementen aufweist.

11. Aerosolerzeugungssystem (200) nach Anspruch 10, wobei die Schaltung (33) ferner zum Anweisen der Peripherievorrichtung (50'), über die Kommunikationsschnittstelle (37), ausgelegt ist, das vierte haptische Ausgabeelement (51') in Reaktion auf das Fehlen des ersten Statussignals zu betätigen.

12. Aerosolerzeugungssystem (200) nach Anspruch 10 oder Anspruch 11, wobei die Peripherievorrichtung einen zum Erzeugen eines fünften Statussignals in Reaktion auf einen die Peripherievorrichtung haltenden Benutzer ausgelegten zweiten Sensor aufweist, und
wobei die Schaltung (33) ferner zum Anweisen der Peripherievorrichtung (50'), über die Kommunikationsschnittstelle (37), ausgelegt ist, das vierte Ausgabeelement in Reaktion auf das fünfte Statussignal zu betätigen.

13. Aerosolerzeugungssystem (200) nach einem der Ansprüche 10-12, wobei die Peripherievorrichtung ausgewählt ist aus der Gruppe bestehend aus einem Telefon, einem Smartphone, einem Tablet, einer intelligenten Uhr, einem intelligenten Armband, einem Fitness-Tracker, einer anderen Aerosolerzeugungsvorrichtung, einem Computer, einem Augmented-Reality- oder Virtual-Reality-Headset und kabellosen Kopfhörern.

14. Verfahren (300) zum Erzeugen einer Ausgabe in einem Aerosolerzeugungssystem, wobei das Aerosolerzeugungssystem ein Gehäuse (39), das einen Lufteinlass (38), einen Luftauslass und einen sich dazwischen erstreckenden Luftstromweg umfasst, und ein innerhalb des Gehäuses (39) angeordnetes und zum Erzeugen eines Aerosols innerhalb des Luftstromweges ausgelegtes Aerosolerzeugungselement (36) umfasst, wobei das Verfahren umfasst:
Bereitstellen einer Vielzahl von haptischen Ausgabeelementen (310);
Bereitstellen einer mit der Vielzahl von haptischen Ausgabeelementen (320) betriebsfähig verbundenen Schaltung (33);
Bereitstellen eines ersten Sensors (32'), der mit dem Gehäuse (39) gekoppelt und zum Erzeugen eines ersten Statussignals in Reaktion auf das Halten der Aerosolerzeugungsvorrichtung durch einen Benutzer ausgelegt ist, und
unabhängiges Betätigen eines ersten haptischen Ausgabeelements (30') der Vielzahl von Ausgabeelementen durch die Schaltung (33) in Reaktion auf das erste Statussignal (330).

## Revendications

1. Dispositif de génération d'aérosol comprenant :
un logement (39) comprenant une entrée d'air (38), une sortie d'air et un trajet d'écoulement d'air s'étendant entre celles-ci ;
un élément de génération d'aérosol (36) disposé au sein du logement (39) et configuré pour générer un aérosol au sein du trajet d'écoulement d'air ;
une pluralité d'éléments de sortie haptiques ;
un circuit (33) couplé de manière opérationnelle à la pluralité d'éléments de sortie haptiques et configuré pour actionner indépendamment chaque élément de sortie haptique de la pluralité d'éléments de sortie haptiques ; et
un premier capteur (32') couplé au logement (39) et configuré pour générer un premier signal d'état en réponse à un utilisateur tenant le dispositif de génération d'aérosol,
dans lequel le circuit (33) est configuré pour actionner un premier élément de sortie haptique (30') de la pluralité d'éléments de sortie haptiques en réponse au premier signal d'état.

2. Dispositif de génération d'aérosol selon la revendication 1, dans lequel au moins certains éléments de sortie haptiques de la pluralité d'éléments de sortie haptiques sont couplés au logement (39).

3. Dispositif de génération d'aérosol selon la revendication 1 ou 2, dans lequel le premier capteur (32') est en outre configuré pour générer un deuxième signal d'état en réponse au fait que l'utilisateur prend le dispositif de génération d'aérosol, et
dans lequel le circuit (33) est en outre configuré pour actionner un deuxième élément de sortie haptique de la pluralité d'éléments de sortie haptiques en réponse au deuxième signal d'état.

4. Dispositif de génération d'aérosol selon l'une quelconque des revendications précédentes, comprenant en outre un élément d'entrée configuré pour générer un troisième signal d'état, et
dans lequel le circuit (33) est en outre configuré pour actionner un troisième élément de sortie haptique de la pluralité d'éléments de sortie haptiques en réponse au troisième signal d'état.

5. Dispositif de génération d'aérosol selon la revendication 4, dans lequel l'élément d'entrée est choisi dans le groupe constitué par un bouton, un capteur tactile, un commutateur, une manette, une boule roulante, un écran tactile, un microphone, un cadran, un pommeau, un capteur de pression, un capteur capacitif, un capteur d'écoulement d'air, un capteur infrarouge, un scanner, un capteur optique, une caméra, un scanner d'empreinte digitale ou un autre capteur biométrique, un capteur chimique, un capteur de température, un capteur d'inclinaison ou un capteur de mouvement.

6. Dispositif de génération d'aérosol selon l'une quelconque des revendications précédentes, dans lequel le premier capteur (32') est choisi dans le groupe constitué par un capteur tactile, un capteur de pression, un capteur optique et un capteur de mouvement.

7. Dispositif de génération d'aérosol selon l'une quelconque des revendications précédentes, dans lequel les éléments de sortie haptiques de la pluralité d'éléments de sortie haptiques sont choisis indépendamment dans le groupe constitué par un actionneur mécanique, un actionneur piézoélectrique et un élément de sortie thermique.

8. Dispositif de génération d'aérosol selon l'une quelconque des revendications précédentes, dans lequel l'élément de génération d'aérosol (36) est un dispositif de chauffage.

9. Système de génération d'aérosol (200) comprenant un dispositif de génération d'aérosol selon l'une quelconque des revendications précédentes et un substrat de génération d'aérosol (41), dans lequel le substrat de génération d'aérosol (41) comprend de la nicotine.

10. Système de génération d'aérosol (200) comprenant un dispositif selon l'une quelconque des revendications précédentes et un dispositif périphérique (50'), le dispositif comprenant en outre une interface de communication (37) en communication fonctionnelle avec le circuit (33),
dans lequel le circuit (33) est configuré pour communiquer avec le dispositif périphérique (50') via l'interface de communication (37), et
dans lequel le dispositif périphérique (50') comprend un quatrième élément de sortie haptique (51') de la pluralité d'éléments de sortie haptiques.

11. Système de génération d'aérosol (200) selon la revendication 10, dans lequel le circuit (33) est en outre configuré pour ordonner au dispositif périphérique (50'), via l'interface de communication (37), d'actionner le quatrième élément de sortie haptique (51') en réponse à une absence du premier signal d'état.

12. Système de génération d'aérosol (200) selon la revendication 10 ou la revendication 11, dans lequel le dispositif périphérique comprend un deuxième capteur configuré pour générer un cinquième signal d'état en réponse à un utilisateur tenant le dispositif périphérique, et
dans lequel le circuit (33) est en outre configuré pour ordonner au dispositif périphérique (50'), via l'interface de communication (37), d'actionner le quatrième élément de sortie en réponse au cinquième signal d'état.

13. Système de génération d'aérosol (200) selon l'une quelconque des revendications 10 à 12, dans lequel le dispositif périphérique est choisi dans le groupe constitué par un téléphone, un téléphone intelligent, une tablette, une montre intelligente, un bracelet intelligent, un moniteur de condition physique, un autre dispositif de génération d'aérosol, un ordinateur, un casque à réalité augmentée ou à réalité virtuelle et des casques sans fil.

14. Procédé (300) de génération d'une sortie dans un système de génération d'aérosol, le système de génération d'aérosol comprenant un logement (39) comprenant une entrée d'air (38), une sortie d'air, et un trajet d'écoulement d'air s'étendant entre celles-ci, et un élément de génération d'aérosol (36) disposé au sein du logement (39) et configuré pour générer un aérosol au sein du trajet d'écoulement d'air, le procédé comprenant :
la fourniture d'une pluralité d'éléments de sortie haptiques (310) ;
la fourniture d'un circuit (33) couplé de manière fonctionnelle à la pluralité d'éléments de sortie haptiques (320) ;
la fourniture d'un premier capteur (32') couplé au logement (39) et configuré pour générer un premier signal d'état en réponse à un utilisateur tenant le dispositif de génération d'aérosol, et
l'actionnement de manière indépendante, par le circuit (33), d'un premier élément de sortie haptique (30') de la pluralité d'éléments de sortie en réponse au premier signal d'état (330) .
